Europäisches Patentamt

European Patent Office

Office européen des brevets

(19)

(11) Publication number: 0 232 095
A2

# (12) EUROPEAN PATENT APPLICATION

(21) Application number: 87300609.2

(22) Date of filing: 23.01.87

(51) Int. Cl.³: C 04 B 35/48
C 04 B 35/44

(30) Priority: 24.01.86 US 822081

(43) Date of publication of application:
12.08.87 Bulletin 87/33

(84) Designated Contracting States:
AT BE CH DE ES FR GB IT LI NL SE

(71) Applicant: THE DOW CHEMICAL COMPANY
2030 Dow Center Abbott Road P.O. Box 1967
Midland, MI 48640(US)

(72) Inventor: Henslee, Walter W.
119 Huckleberry
Lake Jackson Texas 77566(US)

(72) Inventor: Witkowski, Thomas S.
3202 Avenue O.
Galveston Texas 77550(US)

(74) Representative: Raynor, John et al,
W.H. Beck, Greener & Co 7 Stone Buildings Lincoln's Inn
London WC2A 3SZ(GB)

(54) Ceramic composites from chemically derived magnesium-aluminate and zirconium oxide.

(57) A heat densifiable composition comprised essentially of:
A) a chemically derived densifiably reactive spinel,
b) one or more zirconium oxide phases,
c) one or more zirconium oxide phase-stabilizing agents, and/or
d) refractory oxides, carbides, or nitrides as stress-absorbing property modifiers;
wherein the densifiable reactive spinel is derived by decomposition of a precursor produced by the chemical precipitation or crystallization of the desired spinel forming metals from an intimate mixture of at least one soluble metal salt. Processes for preparing the composition are also disclosed.

EP 0 232 095 A2

Croydon Printing Company Ltd.

## CERAMIC COMPOSITES FROM CHEMICALLY
## DERIVED MAGNESIUM-ALUMINATE AND ZIRCONIUM OXIDE

The present invention concerns a heat densifiable composition having a spinel and zirconium oxide present and a process for its preparation.

Zirconia is a widely used ceramic material. However, zirconia is generally not used without the addition of a "stabilizing" material usually referred to in the industry as a phase transformation suppressant. The most commonly used "stabilizers" are soluble in zirconia and include calcium oxide (calcia), magnesium oxide (magnesia), yttrium oxide (yttria), and most of the rare earth oxides. These are called stabilizers because they retain a high temperature cubic or tetragonal crystal form of $ZrO_2$, at room temperature, depending on the amount of stabilizer used. By doing so, the system avoids a catastrophic crystallographic phase change during heating and cooling - the tetragonal to monoclinic zirconia crystal change. This transformation is martensitic in nature and is accompanied by a 4 percent volume change in the crystals' unit cell. In a pressed and sintered dense zirconia ceramic, this sudden volume change generates

31,200-F

stresses which cannot be accomodated in the ceramic and results in serious cracking. It is for this reason pure zirconia (i.e. with no stabilizer) has limited applications as a pressed and sintered body. Other oxides which are insoluble in $ZrO_2$, can be added to formdiscrete phases in a zirconia ceramic body. These additives do not necessarily suppress any phase change in the zirconia material but, accomodate the resulting phase transformation stresses which occur upon thermal cycling or aging. In some instances a stress accomodating phase permits a zirconia body to be used without the addition of a "stabilizer" to suppress a phase transformation. The prior art and particularly the industrial community sometimes erroneously refers to stress accomodating phases as stabilizers.

A preferred method in the current art, though, is to add both a stabilizer and a stress-absorbing second phase. Aluminum oxide ($Al_2O_3$, alumina) is one such commonly used stress-absorbing second phase.

Densified stabilized zirconia ceramics are well known and widely used as refractory materials for high temperature furnace applications. Densification of the stabilized oxide is conventionally carried out at temperatures in excess of 1700°C. Target densities of 80 percent or greater of theoretical values are obtained using conventional pressing and sintering techniques without adding materials other than conventional organic lubricants and binders.

There are disadvantages to densifying ceramics at temperatures above 1700°C. Higher sintering temperatures significantly increase grain growth rates which can result in ceramics with lower strengths than

31,200-F

sintered fine grain sizes. A chemically produced $MgAl_2O_4$ densifies at temperatures of 200°C lower (1500°C) with little grain growth. A chemically produced $MgAl_2O_4$ can also act as a grain growth inhibitor by "pinning" the grain boundaries of the zirconium oxide.

In the current art, strengths of zirconia ceramics can be improved by employing post-sintering heat treatments. D. L. Porter and A. H. Heuer in "Microstructural Development in MgO- Partially Stabilized Zirconia (Mg-PSZ)", J. Am. Ceram. Soc., 62 [5-6] 298-305 (1979) have shown that these improvements are due to the precipitation of metastable tetragonal particles (approximately 0.1-0.5 microns) in large 50 micron cubic zirconia grains. Application of an additional heat treatment in the ceramic processing step is economically questionable. Also, Porter's heat treatment does not eliminate any entrapped or residual porosity which can result from fast grain growth rates occurring during the solution annealing densification step.

Densification can be achieved at lower temperatures (resulting in finer grain sizes) by adding liquid phase sintering aids to the powder processing step. Buchanan et al. (U.S. Patent 4,303,447) have achieved theoretical densities of greater than 90 percent at temperatures as low as 1100°C using low melting borates and vanadates. The resulting microstructure is dense and has the desired small grain sizes and good room temperature strengths, but its usefulness as a refractory material is limited to temperatures less than its densification temperature. Recent zirconia applications in corrosive environments require temperatures in excess of 1200°C (e.g. molten metal applications). The glassy liquid phase binding the zirconia grains using Buchanan's method can melt and result in refractory failure.

A developing group of materials suitable as sintering aids are active powders produced by chemical methods. Active zirconium oxides are available but their costs are often prohibitive for large scale operations.

In accordance with the present invention a reactive spinel, its precursor salt, and/or mixtures of the two, for example $MgA_2lO_4$, is admixed either wet or dry with zirconium oxide which may or may not contain stabilizers such as CaO, MgO or $Y_2O_3$. These stabilizers may already have been incorporated as part of the zirconium oxide crystal lattice, (henceforth referred to as "pre-stabilized zirconias"), or may be added as a powder/slurry mixture as an oxide or precursor salt, or added as a by-product nonstoichiometric phasé in the spinel material.

The resulting mixture is then densified at temperatures above about 1000°C, or such other temperatures normally below those presently employed, to form a dense granular or fine grained body (shaped by pressing, slip casting, or extruding the body prior to firing) having improved physical and chemical properties.

The invention includes a heat densifiable composition comprised essentially of:

a) 95 to 5 percent by weight of a chemicaly derived densifiably reactive spinel, and

b) 5 to 95 percent by weight of one or more zirconium oxide crystal form phases, and

c) up to 20 percent by weight of a compound of one or more zirconium oxide phase-stabilizing agents, and/or

d) refractory oxides, carbides or nitrides as stress-absorbing property modifiers;

wherein the densifiable reactive spinel is derived by decomposition of a precursor produced by the chemical process of precipitation or crystallization of the desired spinel forming metals from an intimate mixture of at least one soluble metal salt.

The stabilizers may be segregated phases within the spinel or prereacted with the zirconia or added to the powdered mixture of spinel and zirconia before sintering. A reactive spinel is one which has not completely densified and is usually characterized by large surface areas.

I. Spinel as a Performance Additive to Zirconia

One aspect of this invention relates to densified zirconia ($ZrO_2$) ceramic compositions and to processes for densifying such compositions by incorporating a reactive, chemically produced spinel, (in this case magnesium aluminum oxide) or precursor salt at any stage of the powder fabrication process. Additions of up to and including 30 weight percent of spinel to zirconia can serve as a performance additive to these commercially available zirconias. Henceforth, the term 'performance additive' will refer to a material which improves either the powder processing or the sintered physical properties of another material. Specifically, a chemically produced stoichiometric magnesium aluminum oxide acts as a stress absorbing phase in a composite with zirconium oxide. Also, these spinel additions are said to densify the zirconium oxide composite at temperatures significantly lower than those currently used.

Chemically produced spinel containing composites or their precursors are preferred additions to unstabilized zirconias. During the heating of a formed zirconia-spinel precursor body, intimately mixed oxides of MgO (or $Al_2O_3$) and stoichiometric spinel are formed. At the sintering temperature the MgO phase can stabilize the zirconia phase through solid state diffusion processes. Any remaining stoichiometric spinel phase (and/or $Al_2O_3$) remains as a discrete phase. An advantage to this invention lies in that only one material is added to unstabilized zirconium oxide. This material forms a stabilizing and stress-absorbing phase in situ during sintering. Hence, the addition of chemically precipitated spinel containing composite or its precursor can eliminate the need for using a more expensive pre-stabilized zirconia, or adding a more expensive stabilizing rare earth oxide along with a stress accomodating oxide phase addition.

This invention includes a chemically produced Mg-Al spinel added to 30 percent by weight of zirconia that also enhances the densification of an unstabilized or stabilized zirconia. Although it is believed that other submicron particle powders can effectively be used as sintering aids, a chemically produced reactive spinel is a more attractive choice in that target densities can be achieved at temperatures 200°C lower

31,200-F

than current sintering temperatures. The spinel used in this invention is an inert, high melting, non glass-forming material which can be used in applications where temperatures exceed those where glassy phase sintering additives fail. The sintering temperature is low enough, though, to prevent excessive grain growth. The resulting sintered ceramic, therefore, retains good high temperature strength. Magnesium aluminum spinel is chemically resistant to both acids and bases and is chemically compatible with $ZrO_2$ (which is used primarily in basic environments).

II. Spinel-Zirconia Ceramics

Formulations covering 20 to 80 weight percent spinel added to an unstabilized zirconia and conversely 20 to 80 weight percent zirconia added to spinel represents a new class of ceramic composites. Attempts have been made recently to fabricate $ZrO_2$-$MgAl_2O_4$ composites, but these have involoved the use of nonreactive spinel powders (mostly fused-cast) with either chemically prepared or fused zirconias to study the transformation toughening phenomenon in partially stabilized zirconias. These have generally been densified at very high temperatures (i.e. greater than 1700°C) or have involved nonconventional processing techniques such as hot pressing or hot isostatic pressing. The present invention uses a reactive spinel produced by a chemical process mixed with commercially available zirconium oxide to produce a dense ceramic at temperatures, as low as 1500°C, using a one step sintering cycle.

The chemical stability of magnesium aluminum oxide, along with its neutral salt chemistry, makes it

31,200-F

a compatible composite material for zirconia, which is used predominantly in pH basic environments. Because of this, spinel can be substituted partially for zirconia. Variation in the Al-Mg ratio in the spinel containing composite or its precursor can yield, on sintering with zirconia, a variety of $MgO-Al_2O_3-ZrO_2-MgAl_2O_4$ composites including $ZrO_2-MgAl_2O_4$; $ZrO_2-MgAl_2O_4-Al_2O_3$, $ZrO_2-MgO-MgAl_2O_4$ composites. The zirconia phase can be in either one or more of its polymorphic phases. Which zirconia polymorph mixture is present depends on the Al-Mg ratio in the spinel containing composite (or its precursor). Consequently, this affects the thermal shock and strength properties of the final composite. The preferred composite which yields better thermal shock and strength properties has either fine metastable tetragonal zirconia or a mixture of the cubic and tetragonal/monoclinic zirconia solid solution with the spinel or spinel-forming precursor.

Applications around 50 w/o spinel:zirconia range show densities and strengths suitable for use in corrosive refractory applications and technical ceramics. Formulations toward the zirconia-rich region show promise in more traditional zirconia applications such as kiln furniture. Formulations toward the spinel-rich region show promise as abrasive composites where the current art uses $Al_2O_3-ZrO_2$ materials.

III. Zirconia as a Performance Additive to Spinel

Additives up to and including about 30 weight percent of zirconia can improve the physical properties of a chemically produced active spinel powder in pressed and sintered body applications. Specifically, an increase in flexure strength and thermal shock resistance is observed when $ZrO_2$ and $MgAl_2O_4$ are mixed using conventional ceramic powder mixing techniques and sintered using a one step sintering cycle. Additional post-sintering heat treatments can be done, but are not necessary for improved properties. Careful processing procedures must be followed to disperse the zirconia phase well into the spinel body. The agglomerate size of the zirconia phase must be kept small (less than 20 microns) preferably less than 1 micron or else the thermal shock resistance will decrease. The zirconia may be stabilized or unstabilized. The preferred art is to add unstabilized zirconia to a spinel containing composite specifically a MgO or $Al_2O_3$ enriched $MgAl_2O_4$ (or its precursor). When the degree of non-stoichiometry of the spinel composite is known along with the volume ratio between the spinel and zirconia phases, one can engineer the final ceramic microstructure to yield a partially or fully stabilized zirconia phase _in situ_ during sintering process.

The invention thus disclosed can show improved strengths and thermal shock properties over typical zirconia or spinel refractories processed in an identical manner. Composites of these formulations represent an improved spinel and/or zirconia for use in molten metal handling systems, extrusion dies, kiln furniture, and the like.

Stabilized or unstabilized zirconia can impart improved thermal shock resistance to dense spinel ceramic refractories. Refractories in this class are more easily processed than stabilized zirconias alone. Improved performances are seen in their corrosion

resistance to acidic slags at temperatures above 1200°C and in molten steel applications.

The following examples are provided to illustrate the present invention.

EXAMPLES

### General Method of Preparation

All powder mixtures cited in Table 1, unless otherwise noted, were prepared from commercially available unstabilized zirconia or its precursor salt form and chemically precipitated magnesium aluminum oxide or its precursor form. Formulations of varying weight percents of stoichiometric chemically coprecipitated magnesium aluminum oxide (remainder zirconia) were investigated as well as selected composites which used a MgO-enriched and $Al_2O_3$-enriched composites with $MgAl_2O_4$. Typical impurities for the commercial zirconium oxide included silicon (0.68 percent), iron (0.06 percent), and titanium (0.30 percent) while those for the chemically derived zirconium salts include sodium (0.10 percent), sulfates (0.10 percent), and chlorides (0.40 percent). The magnesium aluminum oxide used, unless otherwise noted, was produced by the coprecipitation process as described in U.S. Patent 4,400,431 (henceforth referred to as chemically produced powder). Typical impurities of the $MgAl_2O_4$ include sodium (0.20 percent), calcium (0.20 percent), and silicon (0.1 percent). The powder mixtures, 100 to 200 gms in weight, were blended and milled in dense alumina-lined ball jars containing dense alumina grinding media. The powders were either dry-milled for four hours or wet-milled in water for four hours and then oven dried at 110°C. All powders

0232095

passed a 100 mesh screen prior to pressing. No binders were added to the powders.

## TABLE 1

| | 1 | 2 | 3 | 4 | 5 | 6 | 7 | 8 | 9 | 10 | 11 | 12 |
|---|---|---|---|---|---|---|---|---|---|---|---|---|
| $ZrO_2$[1] | 100 | 95 | 90 | 85 | 50 | 25 | 10 | 5 | – | 95 | 90 | 5 |
| 2/1 Coppt Spinel 1000°C[2] | – | 5 | 10 | 15 | 50 | 75 | 90 | 95 | 100 | – | – | – |
| 2/1 Fused Spinel[3] | – | – | – | – | – | – | – | – | – | 5 | 10 | 95 |
| 2.2/1 Coppt Spinel 1000°C[4] | – | – | – | – | – | – | – | – | – | – | – | – |
| 1/1 Coppt Spinel 1000°C[5] | – | – | – | – | – | – | – | – | – | – | – | – |
| $Al_2O_3$, [6] | – | – | – | – | – | – | – | – | – | – | – | – |
| MgO [7] | – | – | – | – | – | – | – | – | – | – | – | – |
| CaO, [8] | – | – | – | – | – | – | – | – | – | – | – | – |
| $Y_2O_3$ [9] | – | – | – | – | – | – | – | – | – | – | – | – |
| YSZ-6 [10] | – | – | – | – | – | – | – | – | – | – | – | – |
| YSZ-16 | – | – | – | – | – | – | – | – | – | – | – | – |
| ZBC as received [11] | – | – | – | – | – | – | – | – | – | – | – | – |
| ZBC 1100°C [12] | – | – | – | – | – | – | – | – | – | – | – | – |
| ZBC 1000°C | – | – | – | – | – | – | – | – | – | – | – | – |
| ZBC 900°C | – | – | – | – | – | – | – | – | – | – | – | – |

0232095

## TABLE 1 (continued)

| | | | | | | | | | | | | | | |
|---|---|---|---|---|---|---|---|---|---|---|---|---|---|---|
| ZBC 800°C | - | - | - | - | - | - | - | - | - | - | - | - | - | - |
| ZBC 700°C | - | - | - | - | - | - | - | - | - | - | - | - | - | - |
| ZBC 600°C | - | - | - | - | - | - | - | - | - | - | - | - | - | - |
| 1/1 MgAl Carbon.-Precursor[13] | - | - | - | - | - | - | - | - | - | - | - | - | - | - |
| 1/1 MgAl Carbon., 1100°C[12] | - | - | - | - | - | - | - | - | - | - | - | - | - | - |
| 1/1 MgAl Carbon., 1000°C | - | - | - | - | - | - | - | - | - | - | - | - | - | - |
| 1/1 MgAl Carbon., 900°C | - | - | - | - | - | - | - | - | - | - | - | - | - | - |
| 1/1 MgAl Carbon., 800°C | - | - | - | - | - | - | - | - | - | - | - | - | - | - |
| 1/1 MgAl Carbon., 700°C | - | - | - | - | - | - | - | - | - | - | - | - | - | - |
| 1/1 MgAl Carbon., 600°C | - | - | - | - | - | - | - | - | - | - | - | - | - | - |
| 2/1 Coppt Spinel 1300°C | - | - | - | - | - | - | - | - | - | - | - | - | - | - |

TABLE 1 (continued)

| | 13 | 14 | 15 | 16 | 17 | 18 | 19 | 20 | 21 | 22 | 23 | 24 |
|---|---|---|---|---|---|---|---|---|---|---|---|---|
| $ZrO_2$[1] | - | 95 | 50 | 5 | - | 95 | 50 | 5 | - | 95 | 90 | 90 |
| 2/1 Coppt Spinel 1000°C[3] | - | - | - | - | - | - | - | - | - | - | - | - |
| 2/1 Fused Spinel | 100 | - | - | - | - | - | - | - | - | - | - | - |
| 2.2/1 Coppt Spinel 1000°C[4] | - | 5 | 50 | 95 | 100 | - | - | - | - | - | - | - |
| 1/1 Coppt Spinel 1000°C[5] | - | - | - | - | - | 5 | 50 | 95 | 100 | - | - | - |
| $Al_2O_3$, [6] | - | - | - | - | - | - | - | - | - | 5 | 5 | 5 |
| $MgO$[7] | - | - | - | - | - | - | - | - | - | - | 5 | - |
| CaO, [8] | - | - | - | - | - | - | - | - | - | - | - | - |
| $Y_2O_3$ [9] | - | - | - | - | - | - | - | - | - | - | - | 5 |
| YSZ-6 [10] | - | - | - | - | - | - | - | - | - | - | - | - |
| YSZ-16 | - | - | - | - | - | - | - | - | - | - | - | - |
| ZBC as received [11] | - | - | - | - | - | - | - | - | - | - | - | - |
| ZBC 1100°C [12] | - | - | - | - | - | - | - | - | - | - | - | - |
| ZBC 1000°C | - | - | - | - | - | - | - | - | - | - | - | - |
| ZBC 900°C | - | - | - | - | - | - | - | - | - | - | - | - |

TABLE 1 (continued)

ZBC 800CC

ZBC 700°C

ZBC 600°C

1/1 MgAl Carbon.-Precursor[13]

1/1 MgAl Carbon., 1100°C[12]

1/1 MgAl Carbon., 1000°C

1/1 MgAl Carbon., 900°C

1/1 MgAl Carbon., 800°C

1/1 MgAl Carbon., 700°C

1/1 MgAl Carbon., 600°C

2/1 Coppt Spinel 1300°C

31,200-F

TABLE 1 (continued)

|  | 25 | 26 | 27 | 28 | 29 | 30 | 31 | 32 | 33 | 34 | 35 | 36 |
|---|---|---|---|---|---|---|---|---|---|---|---|---|
| $ZrO_2$[1] | 99.7 | 96.1 | 93.5 | 24.9 | 24.0 | 23.0 | 99.7 | 95.1 | 91.8 | 24.9 | 23.8 | 23.0 |
| 2/1 Coppt Spinel 1000°C[3] | - | - | - | - | - | - | - | - | - | 75 | 75 | 75 |
| 2/1 Fused Spinel | - | - | - | - | - | - | - | - | - | - | - | - |
| 2.2/1 Coppt Spinel 1000°C[4] | - | - | - | - | - | - | - | - | - | - | - | - |
| 1/1 Coppt Spinel 1000°C[5] | - | - | - | - | - | - | - | - | - | - | - | - |
| $Al_2O_3$, [6] | - | - | - | - | - | - | - | - | - | 5 | 5 | 5 |
| MgO[7] | 0.3 | 3.9 | 6.5 | 0.1 | 1.0 | 2.0 | - | - | - | - | 5 | - |
| CaO, [8] | - | - | - | - | - | - | 0.3 | 4.9 | 8.2 | .01 | 1.2 | 2.0 |
| $Y_2O_3$ [9] | - | - | - | - | - | - | - | - | - | - | - | - |
| YSZ-6 [10] | - | - | - | - | - | - | - | - | - | - | - | - |
| YSZ-16 | - | - | - | - | - | - | - | - | - | - | - | - |
| ZBC as received [11] | - | - | - | - | - | - | - | - | - | - | - | - |
| ZBC 1100°C [12] | - | - | - | - | - | - | - | - | - | - | - | - |
| ZBC 1000°C | - | - | - | - | - | - | - | - | - | - | - | - |
| ZBC 900°C | - | - | - | - | - | - | - | - | - | - | - | - |

TABLE 1 (continued)

ZBC 800°C

ZBC 700°C

ZBC 600°C

1/1 MgAl Carbon.-Precursor[13]

1/1 MgAl Carbon., 1100°C[12]

1/1 MgAl Carbon., 1000°C

1/1 MgAl Carbon., 900°C

1/1 MgAl Carbon., 800°C

1/1 MgAl Carbon., 700°C

1/1 MgAl Carbon., 600°C

2/1 Coppt Spinel 1300°C

31,200-F

TABLE I (continued)

| | 37 | 38 | 39 | 40 | 41 | 42 | 43 | 44 | 45 | 46 | 47 | 48 |
|---|---|---|---|---|---|---|---|---|---|---|---|---|
| $ZrO_2$[1] | - | - | - | - | - | - | - | - | - | - | 87.8 | 16.1 |
| 2/1 Coppt Spinel 1000°C[2] | - | 75 | - | 75 | - | - | - | - | - | - | 9.7 | - |
| 2/1 Fused Spinel[3] | - | - | - | - | - | - | - | - | - | - | - | - |
| 2.2/1 Coppt Spinel 1000°C[4] | - | - | - | - | - | - | - | - | - | - | - | - |
| 1/1 Coppt Spinel 1000°C[5] | - | - | - | - | - | - | - | - | - | - | - | - |
| $Al_2O_3$,[6] | - | - | - | - | - | - | - | - | - | - | - | - |
| MgO[7] | - | - | - | - | - | - | - | - | - | - | - | - |
| CaO,[8] | - | - | - | - | - | - | - | - | - | - | 2.5 | - |
| $Y_2O_3$[9] | - | - | - | - | - | - | - | - | - | - | - | - |
| YSZ-6[10] | 100 | 25 | - | - | - | - | - | - | - | - | - | - |
| YSZ-16 | - | - | 100 | 25 | - | - | - | - | - | - | - | - |
| ZBC as received[11] | - | - | - | - | 85 | - | - | - | - | - | - | - |
| ZBC 1100°C[12] | - | - | - | - | - | 85 | - | - | - | - | - | - |
| ZBC 1000°C | - | - | - | - | - | - | 85 | - | - | - | - | - |
| ZBC 900°C | - | - | - | - | - | - | - | 85 | - | - | - | - |

TABLE I (continued)

| | | | | | | | | | | | | | |
|---|---|---|---|---|---|---|---|---|---|---|---|---|---|
| ZBC 800°C | - | - | - | - | - | - | - | 85 | - | - | . - | - | |
| ZBC 700°C | - | - | - | - | - | - | - | - | 85 | - | - | - | |
| ZBC 600°C | - | - | . | - | - | - | . - | - | 85 | - | - | - | |
| 1/1 MgAl Carbon.-Precursor[13] | - | - | - | - | - | - | - | . - | 85 | - | - | |
| 1/1 MgAl Carbon., 1100°C[12] | - | - | - | - | - | - | . - | - | - | - | - | |
| 1/1 MgAl Carbon., 1000°C | - | - | - | - | 15 | - | - | - | - | - | - | |
| 1/1 MgAl Carbon., 900°C | - | - | - | - | - | 15 | - | - | - | - | - | - | |
| 1/1 MgAl Carbon., 800°C | - | - | - | - | - | 15 | - | - | - | - | - | |
| 1/1 MgAl Carbon., 700°C | - | - | - | - | - | - | 15 | - | - | - | - | |
| 1/1 MgAl Carbon., 600°C | - | - | - | - | - | - | - | 15 | . - | - | - | |
| 2/1 Coppt Spinel 1300°C | - | - | - | - | - | - | - | - | 15 | - | - | |
| | - | - | - | - | - | - | - | - | - | - | - | 83.9 | |

Footnotes for Table 1

1 Zirox 250, TAM Ceramics Inc., Niagara Falls, NY

2 A $MgAl_2O_4$ spinel prepared in accordance with U.S. Patent 4,400,431.

3 A $MgAl_2O_4$ purchased from Norton Company.

4 A $MgAl_2O_4$ having been prepared from a Mg/Al ratio of 1:2.2 prepared in accordance with U.S. Patent No. 4,400,431.

5 A $MgAl_2O_4$ having a Mg/Al ratio of 1:1 prepared in accordance with U.S. Patent No. 4,400,431.

6 T-61, Alcoa, Pittsburgh, PA.

7 Calcined from Dow MHT-100 magnesium hydroxide

8 Fisher Scientific, reagent grade

9 Molycorp Chemicals

10 YSZ-6 - 6% Yttria stabilized zirconia; YSZ-16 - 16% Yttria stabilized zirconia both purchased from Magnesium Electron, Inc. (MEL)

11 Zirconium Basic Carbonate, Magnesium Electron Inc., Flemington, NJ

12 calcined in our laboratory

13 MgAl Carbon. a 1:1 atomic ratio - Magnesium-Aluminum Hydroxy Bicarbonate.

Specimen disks, 2.5 cm in diameter and 1.5 cm thick were pressed in a hydraulic uniaxial press at 70 MPa (10,000 psi) using oleic acid as a mold lubricant and release agent. The disks were placed on high density alumina or spinel setter trays to minimize contamination and held at 1500°C for eight hours. The time to reach sintering temperatures (1500°C) was approximately 10 hours. Furnace cooling time was also approximately 10 hours. Theoretical densities were calculated for each composition using 3.58 g/cm$^3$ for the $MgAl_2O_4$ and 5.70 g/cm$^3$ for the $ZrO_2$ as theoretical values. Bulk density and specific gravity were determined using the ASTM C-20 (1978) test method. X-ray diffraction techniques determined the relevant zirconia/spinel phase morphology. Strengths, where noted, were determined using a 3-point flexure test on bar specimens or a biaxial flexure test on disk specimens. Corrosion resistance results were based on measurements of molten acidic lignite slag penetration using a sessile drop test at 1300°C.

Density

Table 2 shows the densification levels achieved by adding 5 w/o of the various additives to a commercial refractory grade zirconium oxide. The zirconium oxide pellet with no additive (Example 1) cracked apart during sintering and cooling. It is apparent that all items added which resulted in a non-cracked pellet acted as performance additives. However, the chemically produced magnesium aluminate (Example 2, 18, 14), irrespective of stoichiometry, showed superior densification under the similar processing than the more commonly used additives and stabilizers. Densities of this magnitude (i.e. greater than 80 percent of theoretical values) are generally attained with this powder only at temperatures exceeding 1700°C. Thus, a chemically produced magnesium aluminum oxide addition serves as a densification aid to non-chemically produced zirconium oxides.

Table 3 shows that improved densification is observed across the entire composition range of unstabilized zirconia and stoichiometric magnesium aluminates. Note that spinel powders formed via fusion casting routes (Example 10, 11, 12, 13) do not act as densification aids either in zirconia-based (i.e. greater than 50 w/o $ZrO_2$) or in the spinel based composites. Note also that the density levels attained in the spinel based composite formulations (i.e. Examples·6, 7, 8) are suitably high for transformation toughening mechanisms to operate (at densities greater than 90% theoretical values). Powders blended in this region allow for the possibility of producing "toughened" spinel objects at sintering temperatures 200°C lower than those currently used.

## TABLE 2
### Effect of 5 w/o Additions of Various Materials to Densification of a Commercial Zirconium Oxide

| Example | Specific Gravity $(g/cm^3)$ | Theoretical Density, % | Comments |
|---|---|---|---|
| 1 | * | * | Commercial $ZrO_2$ Cracked apart |
| 2 | 4.643 | 84.3 | Chemically Precipitated $MgAl_2O_4$ Sintering Aid |
| 18 | 4.704 | 84.8 | Chemically Precipitated $MgO-MgAl_2O_4$ Stabilizer/Sintering Aid |
| 14 | 4.573 | 83.8 | Chemically Precipitated $Al_2O-MgAl_2O_4$ Sintering Aid |
| 47 | 4.411 | 79.0 | Commercial CaO, Stabilizer |
| 10 | 3.866 | 70.4 | Fused Cast $MgAl_2O_4$, Sintering Aid |
| 22 | 3.884 | 69.4 | Commercial $Al_2O_3$, Sintering Aid |
| 48 | 3.943 | 63.9 | Commercial MgO, Stabilizer |
| 49 | 3.603 | 62.5 | Commercial $Y_2O_3$, Stabilizer |
| 23 | 3.311 | 60.3 | Sintered $MgO\cdot Al_2O_3$ Sintering Aid |

## Table 3
Comparison of fusion cast and chemically precipitated
$MgAl_2O_4$ on density in $ZrO-MgAl_2O_4$ composites

| Example No. | Specific Gravity $g/cm^3$ | Theoretical Density, % | Comments |
|---|---|---|---|
| 2 | 4.254 | 81.7 | 95:5 $ZrO_2$:$MgAl_2O_4$ weight ratio chemically produced spinel |
| 3 | 4.007 | 78.8 | 90:10 chemically produced spinel |
| 4 | 3.796 | 78.9 | 85:15 chemically produced spinel |
| 5 | 3.873 | 83.6 | 50:50 chemically produced spinel |
| 6 | 3.584 | 87.3 | 25:75 chemically produced spinel |
| 7 | 3.478 | 94.6 | 10:90 chemically produced spinel |
| 8 | 3.313 | 92.1 | 5:95 chemically produced spinel |
| 9 | 3.365 | 94.2 | 0:100 chemically produced spinel |
| 10 | 4.078 | 74.3 | 95:5 Fused cast spinel |
| 11 | 3.866 | 70.4 | 90:10 Fused cast spinel |
| 12 | 2.659 | 74.8 | 5:95 Fused cast spinel |
| 13 | 2.690 | 75.2 | 0:100 Fused cast spinel |

Table 4 shows that in Examples 41 through 46, the spinel forming precursor (in this case the magnesium aluminum hydroxybicarbonate) and the zirconia forming precursor (zirconium basic carbonate) were independently calcined at the temperature noted and physically mixed to form a composite powder. It is known that complete formation of the oxides occur prior to reaching 700°C for the spinel-forming material and 800°C for the zirconia-forming material. Table 4 shows that dense $ZrO_2$-$MgAl_2O_4$ composites can also be fabricated with acceptable shrinkages by physically dry blending mixed oxide/precursor materials which form the final composite. Using this method gives good control over density and shrinkages when engineering a composite with particular sintered properties. Table 4 shows that improved densification at 1550°C can be attained by mixing various forms of the converted oxide of each composite forming species with various forms of the converted oxide of the other composite forming species.

Table 4

Examples illustrating that mixing various activities of the spinel-forming
precursor/oxide with various activities of the zirconia forming precursor/oxide
can yield ZrO-MgAlO4 composites with improved densities and acceptable shrinkages.

| Example Number | Calcination Temp. °C | Green Density, g/cm³ | Fired Density g/cm³ | Fired % Theoretical Density | Shrinkage, % | Loss on Ignition, 1550°C, % | Comments* |
|---|---|---|---|---|---|---|---|
| 46 | 600 | 2.604 | 4.159 | 81.4 | 18.2 | 13.3 | Mixed precursor and oxides |
| 45 | 700 | 2.569 | 4.102 | 80.3 | 16.3 | 7.2 | Mixed precursor and oxides |
| 44 | 800 | 2.671 | 4.334 | 84.8 | 16.2 | 5.1 | Mixed precursor and oxides |
| 43 | 900 | 2.773 | 4.473 | 87.5 | 15.7 | 3.8 | Mostly oxides |
| 42 | 1000 | 2.795 | 4.446 | 87.0 | 14.6 | 3.0 | Mostly oxides |
| 41 | 1100 | 3.077 | 4.519 | 88.4 | 11.4 | 1.8 | Oxides |

*Comments refer to powder phases prior to sintering

## Corrosion Resistance

Magnesium aluminate spinel, because of its neutral salt chemistry and high melting temperature, is used in high temperature corrosive applications such as molten metal handling devices. Zirconium oxide is used predominantly in basic refractory conditions such as glass tank linings. Composites of the two should also find use as an alternative material in basic or acidic environments especially when one is considered more economical to use. Density plays an important role in evaluating the success of a refractory under high temperature slagging conditions. Obviously, the more porous the refractory, the greater the amount of exposed refractory surface subject to slag attack. In most cases it is desirable not to have penetration of any kind into the refractory surface. Typically, zirconia refractories for such applications are sintered above 1700°C and contain a residual porosity of 18-20 percent making them adequate refractories in certain high temperature corrosive basic environments. Magnesium aluminum oxide, because it improves the densification of zirconia, also improves the acidic corrosion resistance of zirconia. Slag penetration and erosion effects dominate a refractory whose density is less than 80 percent theoretical density. As density increases, the chemical effects of the slag with the refractory become more important. Spinel produced via U.S. Patent 4,400,431 is chemically pure and does not pose an attack problem at high densities.

Table 5 shows the effect of replacing 75 w/o of the zirconia in three CaO, MgO and $Y_2O_3$ stabilized zirconia systems with chemically produced magnesium aluminum oxide. Because its chemical activity results in higher densities at lower sintering temperatures, the 75 $MgAl_2O_4$-25 $ZrO_2$ (w/o) composites densify and show less penetration throughout the refractory than the corresponding stabilized zirconia alone. The $MgAl_2O_4$ spinel data is presented for comparison (Example 9). Densities of the spinel-zirconia composites were all 90 percent or greater of theoretical values while those of the corresponding $ZrO_2$ system were generally 70-75 percent theoretical density. In all cases where the chemically produced spinels replaced the zirconia, significant improvements in densities and slag resistance were noted. Even in the zirconia-rich (85 w/o) area of the $MgAl_2O_4$-$ZrO_2$ composite (Example 4) significant improvements were seen. The most preferred composites for good slag resistance sintered at 1500°C occurred with $MgAl_2O_4$-rich ceramic composites with $ZrO_2$.

## Table 5
### Slag Penetration results for 3 stabilized Zirconia Composites
### and 3 Stabilized Zirconia – MgAlO4 Composites

| Example | Degree of Stabilization | Volume Fraction Composite | Fired Density, $g/cm^3$ | % Theoretical Density | Slag Penetration, mm |
|---------|------------------------|---------------------------|-------------------------|----------------------|----------------------|
| 31 | CaO – 0.5 m/o | -- | 4.262 | 74 | 7.51 |
| 32 | CaO – 8.0 m/o | -- | 4.236 | 77 | 6.12 |
| 33 | CaO – 13.0 m/o | -- | 4.388 | 78 | 5.05 |
| 34 | CaO – 0.5 m/o | 75 w/o $MgAl_2O_4$ | 3.655 | 90 | 0.25 |
| 35 | CaO – 8.0 m/o | 75 w/o $MgAl_2O_4$ | 3.461 | 85 | 0.46 |
| 36 | CaO – 13.0 m/o | 75 w/o $MgAl_2O_4$ | 3.510 | 86 | 0.33 |
| 25 | MgO – 0.5 m/o | -- | 4.209 | 74 | 3.61 |
| 26 | MgO – 8.0 m/o | -- | 4.228 | 76 | 2.40 |
| 27 | MgO – 13.0 m/o | -- | 4.002 | 73 | 2.82 |

Table 5 continued

| Example | Degree of Stabilization | Volume Fraction Composite | Fired Density, $q/cm^3$ | % Theoretical Density | Slag Penetration, mm |
|---|---|---|---|---|---|
| 28 | MgO - 0.5 m/o | 75 w/o $MgAl_2O_4$ | 3.573 | 87 | 0.46 |
| 29 | MgO - 8.0 m/o | 75 w/o $MgAl_2O_4$ | 3.992 | 86 | 0.31 |
| 30 | MgO - 13.0 m/o | 75 w/o $MgAl_2O_4$ | 3.502 | 86 | 0.15 |
| 37 | $Y_2O_3$ - 3.4 m/o | -- | 3.261 | 57 | >8.00 |
| 39 | $Y_2O_3$ - 9.2 m/o | -- | 3.100 | 55 | >8.00 |
| 38 | $Y_2O_3$ - 3.4 m/o | 75 w/o $MgAl_2O_4$ | 3.767 | 92 | 0.25 |
| 40 | $Y_2O_3$ - 9.2 m/o | 75 w/o $MgAl_2O_4$ | 3.657 | 89 | 0.25 |
| 4 | unstabilized zirconia | 15 w/o $MgAl_2O_4$ | 3.796 | 78.9 | 1.10 |
| 9 | -- | 100 w/o $MgAl_2O_4$ | 3.365 | 94.2 | 0.50 |

### Flexure Strength

Adding $ZrO_2$ or one of its precursor salts to a chemically produced $MgAl_2O_4$, $MgO-MgAl_2O_4$, or $Al_2O_3-MgAl_2O_4$, or their precursor hydroxides will result in a powder suitable for fabricating dense objects with improved strengths. However, there exists an intimate relationship between the stoichiometry of the $MgAl_2O_4$ (i.e. the amount of excess MgO or $Al_2O_3$ produced upon calcination) and the ammount of $ZrO_2$ phase available for potential stabilization. It has already been shown that improved densities can be obtained across the composite field. Improved strengths can also be obtained provided one understands the relationship between the $MgAl_2O_4$ stoichiometry and the amount of $ZrO_2$ phase present. For example, in Table 6, both increased densities and increased strengths are observed as a function of $MgAl_2O_4$ addition in the stoichiometric $MgAl_2O_4$ - $ZrO_2$ composites (Examples 2, 5, 8, 9). However, in none of the particular formulations illustrated for the $MgAl_2O_4$ do we observe increased strength because of the zirconia additions. In fact, comparing Example 9 to Example 8, a net decrease in strength is observed upon adding $ZrO_2$. It is inconclusive, at present, to say that <u>stoichiometric</u> spinel-zirconia composites can result in an object with higher strengths until one observes strengths of objects with equivalent densities and different $ZrO_2$ level additions. However, X-ray diffraction scans do show that when a MgO enriched $MgAl_2O_4$ powder is used, some zirconia stabilization does occur. This implies the potential for fabricating a toughened spinel or zirconia composite from a spinel powder with a non-stoichiometric Al/Mg ratio.

## Table 6
### Physical Properties of Zirconia – Magnesium Aluminate Composites

| | Fired Density $g/cm^3$ | % Theoretical Density | Strength, psi (MPa) | X-Ray Analysis |
|---|---|---|---|---|
| **Mg Enriched MgAl₂O₄ Series:** | | | | |
| 18 | 4.704 | 84.8 | 12.700 (88) | $m-ZrO_2$[1] <br> $c-ZrO_2$ (minor) <br> $MgAl_2O_4$ (weak) |
| 19 | 3.907 | 91.4 | 37,100 (256) | $MgAl_2O_4$ <br> $c-ZrO_2$ <br> $m-ZrO_2$ |
| 20 | 3.48 | 98.0 | 21,500 (148) | $MgAl_2O_4$ <br> $c-ZrO_2$ <br> MgO |
| 21 | 3.230 | 91.3 | 22,500 (155) | $MgAl_2O_4$ <br> MgO |

Table 6 (continued)
Physical Properties of Zirconia - Magnesium Aluminate Composites

| | Fired Density $g/cm^3$ | % Theoretical Density | Strength, psi (MPa) | X-Ray Analysis |
|---|---|---|---|---|
| $Al_2O_3$ Enriched $MgAl_2O_4$ Series: | | | | |
| 14 | 4.573 | 83.8 | 33.200 (229) | $c-ZrO_2$ CaO (minor) $Al_2O_3$ (minor) |
| 15 | 4.000 | 91.9 | 30,000 (209) | $c-ZrO_2$ $m-ZrO_2$ $MgAl_2O_4$ |
| 16 | 3.267 | 92.1 | 44,800 (309) | $MgAl_2O_4$ $c-ZrO_2$ |
| 17 | 3.297 | 96.1 | 50,700 (350) | $MgAl_2O_4$ $c-ZrO_2$ |

[1] $m\ ZrO_2$ = monoclic zirconia

[2] $c-ZrO_2$ = cubic zirconia

Table 6 continued)
Physical Properties of, Zirconia - Magnesium Aluminate Composites

| | Fired Density g/cm3 | % Theoretical Density | Strength, psi (MPa) | X-Ray Analysis |
|---|---|---|---|---|
| Stoichiometric $MgAl_2O_4$ Series: | | | | |
| 2 | 4.643 | 83.6 | 21.700 (136) | $m-ZrO_2$ $MgAl_2O_4$ (weak) |
| 5 | 3.873 | 91.4 | 37,100 (150) | $MgAl_2O_4$ $c-ZrO_2$ $m-ZrO_2$ |
| 8 | 3.303 | 92.1 | 29,600 (204) | $MgAl_2O_4$ $c-ZrO_2$ |
| 9 | 3.365 | 94.2 | 35,600 (245) | $MgAl_2O_4$ |

This is illustrated in Table 7 which shows the d-spacings for various samples around 3.000 Angstroms. Example 1 is the monoclinic $ZrO_2$ powder used in this study (TAM Ceramics ZIROX 250, Niagara Falls, NY). Example 21 is a MgO-enriched spinel composite powder used in this study. The powder from Example 1 is mixed with the powder from Example 21 in the appropriate ratio to get the powder of Example 19, whose d-spacings are listed. The physical mixture of the two do not simply show an overlap of the two X-ray scans. The appearance of a peak at the 2.9696 Angstroms d-spacing suggests the formation of a cubic zirconia phase which can only arise from the stabilization of the $ZrO_2$ phase with the excess MgO. By calculating the amount of excess MgO in the composite powder (in this case 0.6 gms MgO) and by knowing the amount of $ZrO_2$ present (in this case 50 gms), one sees that the MgO/$ZrO_2$ stabilization ratio corresponds to approximately 1.2 w/o level. Correlating this to Grain's (1965) MgO-$ZrO_2$ phase diagram at 1500°C the expected $ZrO_2$ phase mixture would be a cubic and tetragonal (monoclinic) mixture. So the emergence of a cubic $ZrO_2$ peak is not unexpected. In fact, for all physical mixtures of MgO-$MgAl_2O_4$ and $ZrO_2$ one can design a sintered body which has either a partially stabilized or fully stabilized zirconia phase. However, a different 'window' of MgO-$MgAl_2O_4$ levels exist for every different spinel - based stoichiometry, as determined by the MgO-$ZrO_2$ phase diagram. In other words, one simply cannot randomly mix MgO-$MgAl_2O_4$ powders with $ZrO_2$ and expect a stronger composite. This explains the significant strength differences observed in Table 6 between samples 5 and 19 both having 50 w/o $ZrO_2$ content but having different net MgO levels from the spinel non-stoichiometry.

Further, X-ray diffraction shows that if too much stabilization occurs, such as in Example 20, the $ZrO_2$ phase becomes saturated with MgO and excess MgO will remain in the composite and actually weaken the composite mixture.

As one can observe, a variety of composites can be formulated by mixing $ZrO_2$ with members of the coprecipitated $MgAl_2O_4$ based composites. Experience to date indicates that the desired composite microstructures consist of a partially stabilized $ZrO_2$ (PSZ) and $MgAl_2O_4$ or a $PSZ-MgAl_2O_4-Al_2O_3$ composite. The stabilization does not necessarily have to come from the non-stoichiometry of the $MgAl_2O_4$ based powder. Impurities, either intentionally precipitated or not, can also result in a stabilized $ZrO_2$ resulting in a composite with enhanced properties. In particular, composites formulated with the Al-enriched species (Examples 14, 15, 16, 17, from Table 6 with an Al/Mg molar ratio = 2.2) used a less pure form of the precursor hydroxide. It was discovered that a 0.6 w/o Ca level in this powder resulted in not only a stabilized $ZrO_2$ phase, but also improved the strengths of the $MgAl_2O_4$ powder alone (Example 17). The chemistry of this improvement is not clear at present, but presumably when mixed with $ZrO_2$, this calcium impurity can partially stabilize the $ZrO_2$ upon sintering. This dramatically improves the strengths over the other composite formulations observed. An interesting observation is that when the $ZrO_2$ phase becomes saturated with the CaO, the excess CaO can improve the remaining $MgAl_2O_4-Al_2O_3$ strengths. Again, an intimate knowledge of impurity levels for the precipitated product is required prior to mixing with

$ZrO_2$. This can be utilized in applications such as oxygen sensors where a stabilizer (either $Y_2O_3$ or CaO), $ZrO_2$, and a performance additive (generally $Al_2O_3$ or $MgAl_2O_4$) are independently produced and physically mixed into a composite powder. In this case a zirconia and a chemically produced $Al_2O_3$-CaO-$MgAl_2O_4$ powder mixture or its precursor salt can be added as a stabilizer/ performance additive package with the advantage of being of high purity, intimately mixed, and of an active nature.

## Table 7

X-Ray Diffraction Analysis of Zirconia, Magnesium Aluminate, and Mixtures of Both Illustrating that non-stoichiometric Spinels can act as Stabilizers to $ZrO_2$

| Example | d-Spacing | Peak Assignment |
|---|---|---|
| 21 | 2.8578 | Spinel (220)c |
|  | 3.1398 | Si Standard |
| 1 | 2.8425 | $ZrO_2$ (111)m |
|  | 3.1466 | Si Standard |
|  | 3.1904 | $ZrO_2$ (111)m |
| 19 | 2.8522 | $ZrO_2$ (111)c |
|  | 2.8629 | Spinel (220)c |
|  | * 2.9696 | $ZrO_2$ (111)c |
|  | 3.1582 | Si Standard |
|  | 3.1834 | $ZrO_2$ (111)m |

m = monoclinic

c = cubic

## Zirconia-Spinel Phosphate Bonded Mortar and Coating

120 grams of the powder from Example 47 was mixed with 20 grams of a 47 percent monoaluminum phosphate solution to make a zirconia-spinel mortar. 1.5 grams of water was added to make a composite mortar of excellent workability with a high (85.7 percent) solids content. The mortar was used to coat the surface of an 85 percent $Al_2O_3$ brick. Upon air-setting, the coating became hard and showed no signs of cracking. Five modulus of rupture (MOR) specimen bars were made by butt-joining two-1 in x 1½ in x 2½ in (2.5 x 3.8 x 6.4 cm) 85 percent alumina brick coupons together. The mortar joints were approximately 0.003 inch (0.008 cm) thick. The bars were air-set and cured for 1 hour at 850°C prior to testing. The mortar-to-brick adhesion appeared to be very good. An average MOR of 885 psi (6 MPa) was achieved. Failure of the specimen occurred along the mortar joint. These results compare favorably to typical commercially available mortars used to bond this material.

## Zirconia-Spinel Casting Slip

A casting slip was made from Example 48 in the following manner. 130 grams of 1300°C stoichiometric $MgAl_2O_4$ spinel was added to 58.0 grams of water along with 15.0 grams of Darvan® 7. Another 30 grams of water was added to promote good milling for 30 minutes. The release time from the gypsum mold indicated that the slip was still too coarse. The slip was milled an additional 40 minutes after which 25.0 grams of zirconium oxide was added. An additional 3 hours and 35 minutes of milling time was required before acceptable mold release times of approximately 2½

minutes were attained. Five pieces approximately 4 inches (10 cm) high and 1 inch (2.5 cm) in diameter were cast and air-dried overnight. No signs of cracking were observed. These five pieces were oven-dried at 100°C for 1 hour and still showed no signs of cracking. The dried green strength was excellent, as was observed by the lack of chipping and crumbling of the specimen upon routine handling. The specimens were sintered at 1500°C for 8 hours and densified to translucency. This indicates that good densification was attained. A linear shrinkage of approximately 22 percent was observed. No cracks were observed after densification.

CLAIMS

1. A heat densifiable composition comprising :

a) 95 to 5 percent by weight of a chemically derived reactive spinel, and

b) 5 to 95 percent by weight of zirconium oxide wherein the densifiable reactive spinel has been derived by decomposition of a precursor produced by the chemical precipitation or crystallization.

2. A heat densifiable composition comprised essentially of:

a) 95 to 5 percent by weight of a chemically derived densifiably reactive spinel, and

b) 5 to 95 percent by weight of one or more zirconium oxide crystal form phases, and optionally

c) up to 20 percent by weight of a compound of one or more zirconium oxide phase-stabilizing agents, and/or

d) refractory oxides, carbides or nitrides as stress-absorbing property modifiers; wherein the densifiable reactive spinel is derived by decomposition of a precursor produced by the chemical precipitation or crystallization of the desired spinel forming metals from an intimate mixture of at least one soluble metal salt.

3. A composition as claimed in Claim 1 or Claim 2 comprising at least one zirconia stabilizing agent which is $CaO$, $Y_2O_3$, or other rare earth oxide.

4. A composition as claimed in Claim 3 in which said zirconia phase stabilizing agent(s) is finely dispersed and has been prepared by chemical precipitation and subsequent decomposition of a metal salt.

5. A composition as claimed in any one of Claims 1 to 4 in which said chemically derived spinel is produced by chemical precipitation.

6. A composition as claimed in any one of Claims 1 to 5 in which said spinel is magnesium aluminum oxide.

7. A composition as claimed in any one of Claims 1 to 6, in which the zirconium oxide is the partially stabilized form consisting of tetragonal zirconia, or monoclinic zirconia or mixture of tetragonal and/or monoclinic zirconia with cubic zirconia.

8. A composition as claimed in any one of Claims 1 to 7, comprising a stress-absorbing property modifier which is aluminum oxide, calcium aluminate, and/or calcium zirconate.

9. A composition as claimed in any one of Claims 1 to 8 in which MgO or calcium oxide are present in excess amounts over that required to stabilize the zirconium oxide phase and function as said described property modifiers.

10. A composition as claimed in any one of Claims 1 to 11 in which CaO is present in an amount between 0.1 and 17.0 mole percent with respect to the zirconium oxide phase.

11. A composition as claimed in Claim 5 in which excess MgO is present in an amount between 0.1 and 14.0 mole percent with respect to the zirconium oxide phase.

12. A composition as claimed in Claim 5 in which $Y_2O_3$ is present in an amount between 0.1 and 15.0 mole percent with respect to the zirconium oxide phase.

13. A process for preparing a heat densifiable composition which process comprises heating a composition comprising:

a) from 95 to 5 percent by weight of a chemically derived reactive spinel prepared by decomposition of a precursor by chemical precipitation or crystallization from a solution of a metal salt, and

b) 5 to 95 percent by weight of zirconium oxide.

14. A process as claimed in claim 13, and including the addtional limitation of any one of claims 2 to 12

15. A composition prepared by mixing monoaluminum phosphate with a composition as claimed in any one of Claims 1 to 12, or a composition prpared by a process as claimed in claim 13 or claim 14, and water, and drying and curing the product.

16. The use of a composition as claimed in Claim 15 as a chemical bond system in mortars, for coatings monolithic refractories or pressed shapes.

## CLAIMS (AT and ES)

1. A process for preparing a heat densifiable composition which process comprises heating a composition comprising:

a) from 95 to 5 percent by weight of a chemically derived reactive spinel decomposition of a precursor prepared by chemical precipitation or crystallization from a solution of a metal salt, and

b) 5 to 95 percent by weight of zirconium oxide.

2. A process as claimed in Claim 1, wherein the composition which is heated also comprises up to 20 percent by weight of one or more zirconium oxide phase-stabilizing agents.

3. A process as claimed in Claim 1 or Claim 2, wherein the composition which is heated comprises at least one stress-absorbing property modifier which is a refractory oxide, carbide or nitride.,

4. A process as claimed in any one of Claims 1 to 3 in which all of the composite components are oxides and are mixed by either dry or wet methods.

5. A process as claimed in any one of Claims 1 to 3 in which all of the composite components are in a soluble, heat decomposable precursor form and are mixed in a liquid medium and co-dried to form the composition which is heated.

6. A process as claimed in any one of Claims 1 to 3 in which some, but not all, of the components in the composite forming material are in the oxide form and are mixed, either by dry or wet methods, with the remaining components of the composite forming mixture, which are in their dry or wet precursor forms, and are then dried.

7.    A process as claimed in any one of Claims 1 to 3 in which some, but not all, of the components in the composite forming material are in the oxide form and are mixed, by either wet or dry methods, with the remaining components of the composite forming mixture, which are in a mixed oxide/percursor intermediate state, and are then dried.

8.    A process as claimed in any one of the preceding claims, wherein the composition is calcined at a temperature from 300°C to 1300°C thereby producing a spinel-zirconia composite powder capable of heat densification and having a density less than theoretical.

9.    A process for preparing a dense zirconia-spinel which comprises heating the product of Claim 4 to about 1300°C or greater with or without first shaping it into a desired shape.

10.    A process as claimed in any one of the preceding claims in which the stabilizing agent(s) is $Ca^O$, $Mg^O$, $Y_2O_3$, or other rare earth oxides.

11. A process as claimed in any one of the preceding claims in which said spinel is magnesium aluminum oxide.

12. A process according to any one of the preceding claims in which the preferred zirconium oxide is the partially stabilized form consisting of tetragonal zirconia, or monoclinic zirconia or a mixture of tetragonal and/or monoclinic zirconia with cubic zirconia.

13. A process as claimed in any one of the preceding claims in which the stress-absorbing property modifier is aluminum oxide, calcium aluminate, and/or calcium zirconate.

14. The process as claimed in any one of the preceding claims in which $M_g O$ or calcium oxide are present in excess amounts over that required to stabilize the zirconium oxide phase and function as said described property modifiers.

15. A process for preparing a heat densifiable composition comprised essentially of:

a) 95 to 5 percent by weight of a chemically derived densifiably reactive spinel prepared by chemical precipitation or crystallization of the desired spinel forming metals from an intimate mixture of at least one soluble metal salt, and

b) 5 to 95 percent by weight of one or more zirconium oxide crystal form phases, and

   c) up to 20 percent by weight of a compound of one or more zirconium oxide phase-stabilizing agents, and/or

   d) refractory oxide, carbides or nitrides as stress-absorbing property modifiers.

16.   A process for preparing a heat densifiable composition comprised essentially of:

   a) 95 to 5 percent by weight of a chemically derived densifiably reactive spinel prepared by chemical precipitation or crystallization of the desired spinel forming metals from an intimate mixture of at least one soluble metal salt, and

   b) 5 to 95 percent by weight of one or more zirconium oxide crystal form phases, and optionally,

   c) up to 20 percent by weight of a compound of one or more zirconium oxide phase-stabilizing agents, and/or

   d) refractory oxides, carbides or nitrides as stress-absorbing property modifiers.